# EUROPÄISCHE PATENTSCHRIFT

(11) **EP 2 486 825 B1**
(45) Veröffentlichungstag und Bekanntmachung des Hinweises auf die Patenterteilung: **25.04.2018**
(21) Anmeldenummer: 12150358.5
(22) Anmeldetag: 06.01.2012
(51) Int. Cl.: A47B 96/02, A47B 96/06, F16B 5/01

(54) **Befestigungsanordnung**
Mounting assembly
Agencement de fixation

(30) Priorität: 09.02.2011 DE 102011010810; 29.03.2011 DE 102011015494
(43) Veröffentlichungstag der Anmeldung: 15.08.2012
(73) Patentinhaber: Fritz Egger GmbH & Co. OG, 6380 St. Johann in Tirol (AT)
(72) Erfinder: Frank, Andreas, 32584 Löhne (DE); Stolzlechner, Georg, 6393 St. Ulrich am Pillersee (AT)
(74) Vertreter: Cohausz & Florack

(56) Entgegenhaltungen:
- DE-U1-202008 002 540
- DE-U1-202008 015 732
- US-A- 4 381 715
- US-A- 4 793 267
- US-A1- 2002 152 935

## Beschreibung

Die Erfindung betrifft eine Befestigungsanordnung zur Montage einer Leichtbauplatte, insbesondere eines Wandboards, an einer Wand, z.B. einer Wand eines Möbels (Seitenwand, Rückwand, Boden, Deckel) oder einer Gebäudewand, mit einer sich von einer hinteren Schmalseite zu einer vorderen Schmalseite in einer Erstreckungsrichtung erstreckenden Leichtbauplatte, die eine obere Deckplatte, eine vertikal davon beabstandete untere Deckplatte und eine dazwischen angeordnete leichte Mittellage aufweist, mit mindestens einem an der Wand befestigbaren Stützbeschlag, der ein Wandbefestigungsmittel und mindestens ein mit dem Wandbefestigungsmittel verbundenes Stützmittel aufweist, und mit mindestens einem Halteteil, das eine der oberen Deckplatte zugewandte Oberseite und eine der unteren Deckplatte zugewandte Unterseite aufweist und mit einer stirnseitigen Aufnahme für das mindestens eine Stützmittel versehen ist, wobei das mindestens eine Halteteil in der Erstreckungsrichtung in die Mittellage integriert ist und mit seiner Oberseite die obere Deckplatte und mit seiner Unterseite die untere Deckplatte berührt, wobei das Halteteil mit dem Stützmittel des Stützbeschlags rastend zusammenwirkt.

Ferner betrifft die Erfindung ein entsprechendes Möbel.

Im Möbelbau sind Regalbretter zur direkten Befestigung an einer Gebäudewand bekannt. Diese Regalbretter werden auch Wandboards oder Wandregale genannt. Da solche Wandboards ein relativ hohes Gewicht haben, wenn diese aus Vollmaterial, beispielsweise Vollspan, hergestellt sind, werden diese zunehmend aus Leichtbauplatten hergestellt, also einer Platte, die einen Aufbau mit einer oberen Deckplatte, einer unteren Deckplatte und einer dazwischen angeordneten leichten Mittellage aufweist. Mit einer leichten Mittellage ist eine Lage aus einem Material gemeint, die ein geringeres Gewicht, bzw. eine geringere Dichte als das Deckplattenmaterial hat und beispielsweise aus mineralischer Dämmwolle, einer Wabenstruktur, insbesondere aus Kartonwaben, oder aus ähnlichen Materialien besteht.

Ein Wandboard der zuvor beschriebenen Art, das üblicherweise zumindest an den sichtbaren Seiten mit einer Beschichtung versehen ist, kann auf verschiedene Weise an der Wandoberfläche montiert werden.

So ist es bekannt, ein Wandboard mittels einer darunter angeordneten Konsole an der Wand zu montieren. Nachteilig bei dieser Art einer Befestigungsanordnung ist allerdings, dass die Beschlagteile, das heißt die Bauteile der Konsole, sichtbar sind, was oftmals unerwünscht ist. Daneben müssen die Beschlagteile optisch ansprechend gestaltet sein und sind daher relativ teuer.

Es sind daher im Stand der Technik für den Fall, dass als Wandboard eine Leichtbauplatte montiert werden soll, Befestigungsanordnungen mit verdeckten Stützbeschlägen bekannt. So ist beispielsweise ein U-förmiger Bügel bekannt, der mit seiner Grundseite an der Wandoberfläche beispielsweise mittels Verschraubung befestigt wird und dessen beide Arme ins Innere der Leichtbauplatte eingreifen, derart, dass nur die obere Deckplatte der Leichtbauplatte unmittelbar auf den beiden Armen des Stützbeschlags aufliegt. Dies führt allerdings zu einer relativ schlechten Krafteinleitung und in der Folge zu einer relativ geringen Belastbarkeit. Darüber hinaus können unerwünschte Verformungen und vorzeitige Schäden an dem Wandboard durch diese Art der Befestigung hervorgerufen werden.

Ferner ist aus dem Stand der Technik auch eine Befestigungsanordnung unter Verwendung einer Leichtbauplatte bekannt, bei der Spezialdübel in eine aufwendig einzubringende Ausnehmung an einer der Leichtbauplattenschmalseiten eingeklebt werden. Die Leichtbauplatte wird mit den Dübeln auf an der Wand montierte bolzenförmige Stützbeschläge aufgeschoben. Durch das Verkleben erfolgt auch eine Verbindung der Dübel mit der unteren Deckplatte und teilweise mit der Mittellage, wodurch die Krafteinleitung beim montierten Wandboard verbessert wird. Neben den vergleichsweise hohen Kosten des Dübels ist die Herstellung der Ausnehmung und die Klebung allerdings relativ aufwendig und teuer.

Um die Wandmontage zu vereinfachen, ist aus dem Stand der Technik eine wie eingangs beschriebene Befestigungsanordnung bekannt, die eine Leichtbauplatte mit einem darin integrierten Halteteil aufweist, welches die obere und untere Deckplatte innenseitig berührt und auf einen an der Wand montierten Stützbeschlag aufschiebbar ist. Der Stützbeschlag besteht aus einer Platte als Wandfixierungsmittel, von der sich zentral ein Schaft senkrecht zur Plattenoberfläche erstreckt, wobei im montierten Zustand, wenn der Stützbeschlag mit seinem plattenförmigen Wandfixierungsmittel an der Wand anliegt und damit fest verbunden, beispielsweise verschraubt, ist und das Halteteil bestimmungsgemäß mit dem Stützbeschlag zusammenwirkt, der Schaft in einem Kanal verläuft, der im Inneren des Halteteils gebildet ist.

Ein Wandboard ist mittels der zuvor beschriebenen Befestigungsanordnung relativ einfach an einer Wand zu montieren. Jedoch kann sich das Wandboard, da es mit dem Halteteil auf den Schaft des Stützbeschlags axial aufgeschoben ist, auch unabsichtlich entgegen der Aufschieberichtung, d. h. in der eingangs definierten Erstreckungsrichtung, wieder von dem Schaft lösen. Dies kann insbesondere schon allein aufgrund des Eigengewichts des Wandboards und dem daraus resultierenden und auf den Stützbeschlag übertragenen Moment geschehen. Der Effekt wird bei zusätzlicher Belastung des Wandboards in vertikaler Richtung, wenn beispielsweise Gegenstände auf dem Wandboard abgestellt sind, noch verstärkt.

Die US 4,381,715 A und die DE 20 2008 002 540 U1 offenbaren Befestigungsanordnungen zur Montage einer Leichtbauplatte wie eines Wandboards mit einem Stützbeschlag.

Es ist daher die Aufgabe der vorliegenden Erfindung, eine Befestigungsanordnung zur Montage einer Leichtbauplatte an einer Wand bereit zu stellen, mit der eine unerwünschte Bewegung der Leichtbauplatte im montierten Zustand, z.B. aufgrund von Momenten, vermieden wird.

Die zuvor hergeleitete und aufgezeigte Aufgabe wird gemäß einer ersten Lehre der vorliegenden Erfindung bei einer Befestigungsanordnung zur Montage einer Leichtbauplatte, insbesondere eines Wandboards, an einer Wand, zum Beispiel an einer Möbelwand (gemeint ist insbesondere ein Seitenteil, eine Rückwand, ein Boden oder ein Deckel des Möbels), an einer Gebäudewand etc., mit einer sich von einer hinteren (im montierten Zustand der Wand zugewandten) Schmalseite zu einer vorderen (im montierten Zustand von der Wand abgewandten) Schmalseite in einer Erstreckungsrichtung (d. h. in Querrichtung bzw. entgegen der Aufschieberichtung) erstreckenden, insbesondere riegellosen und rahmenlosen, Leichtbauplatte, die eine obere Deckplatte, eine vertikal davon beabstandete untere Deckplatte und eine dazwischen angeordnete leichte Mittellage aufweist, mit mindestens einem an der Wand (mittels Befestigungsmitteln, z. B. Schrauben oder dergleichen) befestigbaren Stützbeschlag, der ein Wandbefestigungsmittel und mindestens ein mit dem Wandbefestigungsmittel verbundenes Stützmittel aufweist, und mit mindestens einem Halteteil, das eine der oberen Deckplatte zugewandte Oberseite und eine der unteren Deckplatte zugewandte Unterseite aufweist und mit einer stirnseitigen Aufnahme für das mindestens eine Stützmittel versehen ist, wobei das mindestens eine Halteteil in der Erstreckungsrichtung in die Mittellage integriert ist und mit seiner Oberseite die obere Deckplatte und mit seiner Unterseite die untere Deckplatte berührt, wobei die Oberseite und/oder Unterseite mit der jeweiligen Deckplatte vorzugsweise fest verbunden und insbesondere verklebt ist, wobei das Halteteil mit dem Stützmittel des Stützbeschlags (im montierten Zustand) rastend zusammenwirkt, dadurch gelöst, dass das Halteteil einen ersten Abschnitt und einen zweiten Abschnitt aufweist, wobei sich der erste Abschnitt in Erstreckungsrichtung weiter in die Leichtbauplatte erstreckt als der zweite Abschnitt, wobei der zweite Abschnitt breiter als der erste Abschnitt ist und wobei das Halteteil mit dem jeweiligen Stützmittel des Stützbeschlags in einem Teil des zweiten Abschnitts haltend zusammenwirkt, der, bezogen auf die Erstreckungsrichtung, seitlich des ersten Abschnitts liegt.

Mit anderen Worten besteht zwischen dem Halteteil und dem Stützmittel bzw. Stützbeschlag eine Rastverbindung (Klickverbindung). Der Vorteil einer solchermaßen ausgebildeten Befestigungsanordnung ist, dass automatisch durch das Befestigen der Leichtbauplatte bzw. des Wandboards an der Wand eine Verrastung erfolgt, die eine Bewegung der bestimmungsgemäß montierten Leichtbauplatte entgegen der Aufschieberichtung zumindest erschwert oder sogar verhindert. Auf diese Weise wird dem Risiko eines ungewollten Lösens der montierten Leichtbauplatte bzw. des montierten Wandboards entgegengewirkt und insbesondere erreicht, dass Momente, die vom Gewicht der/des ggf. auch beschwerten Leichtbauplatte/Wandboards herrühren, besser vom Stützbeschlag aufgenommen und in die Wand übertragen werden können.

Gemäß einer Ausgestaltung der erfindungsgemäßen Befestigungsanordnung weist das mindestens eine Stützmittel des Stützbeschlags eine Rastnase und das Halteteil einen Hinterschnitt auf, der mit der Rastnase (im montierten Zustand) in der Erstreckungsrichtung bzw. entgegen der Aufschieberichtung haltend, das heißt formschlüssig, zusammenwirkt. Grundsätzlich wäre auch der umgekehrte Fall denkbar, wonach eine Rastnase am Halteteil und ein entsprechender Hinterschnitt am Stützmittel vorgesehen ist. In beiden Fällen ist es denkbar, dass das Stützmittel, insbesondere die Rastnase, und/oder der Hinterschnitt, das heißt das den Hinterschnitt bildende Material, zumindest abschnittsweise elastisch ausgebildet ist.

Wie zuvor erläutert, ist es durch das erfindungsgemäß vorgesehene Halteteil, welches zwangsläufig einen beide Deckplatten von innen berührenden Abschnitt aufweist, nicht mehr notwendig, dass die Leichtbauplatte einzelne, nicht miteinander verbundene Riegel, insbesondere in Erstreckungsrichtung verlaufende Querriegel, oder einen Rahmen aus mehreren miteinander verbundenen Riegeln aufweist. Mit einem Rahmen bzw. Riegeln sind Holzelemente aus Vollholz oder verpressten Holzpartikeln gemeint, die im Stand der Technik zwischen den Deckplatten einer Leichtbauplatte dazu dienen, auf die Deckplatten ausgeübten Druck aufzunehmen, um dadurch die empfindliche Mittellage zu schützen. Diesen Schutz übernimmt bei der erfindungsgemäß verwendeten Leichtbauplatte, bei der die Mittellage beispielsweise wie aus dem Stand der Technik bekannt ausgebildet ist und insbesondere eine Kartonwabenstruktur aufweist, das mindestens eine Halteteil. Bevorzugt sind zwei Halteteile oder mehr vorgesehen, die neben der Befestigungsfunktion zur Befestigung der Leichtbauplatte bzw. des Wandboards an der Wand auch eine Stützfunktion übernehmen. Gleichwohl kann die erfindungsgemäß verwendete Leichtbauplatte aber auch selbstverständlich Rahmen oder Riegel aufweisen, wobei in diesem Fall dann aber das mindestens eine Halteteil und die dafür vorgesehene Aufnahme in der Leichtbauplatte in einem Abschnitt der Leichtbauplatte angeordnet sind, der frei von Riegeln und einem Rahmen ist.

Wie zuvor angedeutet, kann bei der erfindungsgemäßen Leichtbauplatte die leichte Mittellage aus einer Kartonwabenstruktur bestehen. Grundsätzlich sind auch andere Materialien denkbar, die eine geringere Dichte bzw. ein geringeres Gewicht als die Deckplatten haben. Die Deckplatten bestehen bevorzugt aus einem Holzwerkstoff, beispielsweise einer Span-, Faser- oder OSB-(oriented strand board-)Platte.

Gemäß der erfindungsgemäßen Befestigungsanordnung ist vorgesehen, dass das Halteteil einen ersten Abschnitt und einen zweiten Abschnitt aufweist, wobei sich der erste Abschnitt in Erstreckungsrichtung weiter in die Leichtbauplatte erstreckt als der zweite Abschnitt, wobei der zweite Abschnitt breiter als der erste Abschnitt ist und wobei das Halteteil mit dem jeweiligen Stützmittel des Stützbeschlags in einem Teil des zweiten Abschnitts haltend zusammenwirkt, der, bezogen auf die Erstreckungsrichtung, seitlich des ersten Abschnitts liegt.

Wenn von dem ersten Abschnitt die Rede ist, ist im Sinne der Erfindung ein Abschnitt des Halteteils gemeint, der insbesondere zur Befestigung des Halteteils an den Innenseiten der Deckplatten dient. Dazu kann der erste Abschnitt Rippen, insbesondere in Form eines Sägezahnprofils (Tannenzapfenprofils), die bevorzugt quer zur Erstreckungsrichtung verlaufen, aufweisen. Diese Rippen erhöhen lokal den Anpressdruck zwischen Halteteil und Deckplatten und sorgen so bevorzugt für einen Presssitz zwischen Halteteil und Deckplatten. Diese Rippen können an der Oberseite und/oder Unterseite des Halteteils vorgesehen sein. Zusätzlich kann auf einer oder beiden Seiten des Halteteils auch noch ein Klebemittel zum verkleben des Halteteils mit der jeweiligen Deckplatte vorgesehen sein. Der zweite Abschnitt kann insbesondere dazu dienen, die Aufnahme für den Stützbeschlag oder zumindest die Stützmittel zu bilden. Dabei ist dieser zweite Abschnitt gemäß dieser Ausgestaltung breiter als der erste Abschnitt, wodurch die von der Leichtbauplatte auf den Stützbeschlag übertragenen Momente über eine größere Fläche an die Wand abgegeben werden können. Vorzugsweise hat der zweite Abschnitt dieselbe Höhe wie der erste Abschnitt, derart, dass der zweite Abschnitt mit seiner Oberseite die Innenseite der oberen Deckplatte und/oder mit seiner Unterseite die Innenseite der unteren Deckplatte berühren kann.

Wenn, wie im vorangehenden Absatz, von der Breite die Rede ist, ist im Sinne der Erfindung die Dimension senkrecht zur Erstreckungsrichtung und parallel zur Längsmittelebene der beiden Deckplatten gemeint, das heißt eine Dimension in Richtung der Längsebene der Leichtbauplatte. Wenn von der Höhe die Rede ist, ist im Sinne der Erfindung die Dimension senkrecht zur Erstreckungsrichtung und senkrecht zur Längsmittelebene der beiden Deckplatten gemeint, das heißt eine Dimension orthogonal zur Längsebene der Leichtbauplatte.

Gemäß noch einer weiteren Ausgestaltung der erfindungsgemäßen Befestigungsanordnung weist der Stützbeschlag mindestens zwei Stützmittel auf, mit denen das Halteteil rastend zusammenwirkt und die insbesondere jeweils eine Rastnase, mit der jeweils ein Hinterschnitt des Halteteils in der Erstreckungsrichtung haltend zusammenwirkt, aufweisen. Die Verwendung von mindestens zwei Stützmitteln je Stützbeschlag erhöht die Stabilität der Befestigungsanordnung und erlaubt auch die Aufnahme von Momenten parallel zur Wandoberfläche.
In dem Fall, dass der Stützbeschlag mindestens zwei Stützmittel aufweist, ist insbesondere denkbar, dass der zweite Abschnitt zu beiden Seiten des ersten Abschnitts je einen Teil aufweist, der, bezogen auf die Erstreckungsrichtung, seitlich des ersten Abschnitts liegt, und wobei das Halteteil in jedem dieser Teile des zweiten Abschnitts mit jeweils mindestens einem der Stützmittel haltend zusammenwirkt. Dies stellt eine besonders einfache Bauweise dar, die ein Maximum an Stabilität gewährleistet, wobei, wie im folgenden noch erläutert wird, der Hinterschnitt, der mit der jeweiligen Rastnase zusammenwirkt, besonders einfach gebildet werden kann.

Gemäß noch einer Ausgestaltung der erfindungsgemäßen Befestigungsanordnung ist vorgesehen, dass der Stützbeschlag mindestens einen Führungszapfen aufweist, wobei sich der mindestens eine Führungszapfen, insbesondere entgegen der Erstreckungsrichtung, über die hintere Schmalseite der Leichtbauplatte hinaus erstreckt. Vorzugsweise weist der Stützbeschlag mindestens zwei voneinander beabstandete Führungszapfen auf, wobei insbesondere jeder der zu beiden Seiten des ersten Abschnitts angeordneten Teile des zweiten Abschnitts mit mindestens einem Führungszapfen versehen ist. Ein oder mehrere solcher Führungszapfen haben den Vorteil, dass die Verbindung des Stützbeschlags bzw. der Leichtbauplatte mit der Wand besonders präzise und dauerhaft erfolgen kann. Dies gilt insbesondere dann, wenn es sich bei der Wand um ein plattenförmiges Möbelteil, beispielsweise die Seite eines Möbels, handelt und die damit zu verbindende Leichtbauplatte beispielsweise einen Boden oder dergleichen des Möbels bildet. In diesem Fall werden Stützbeschlag und Halteteil als Korpusverbinder (Verbinder zweier Möbelteile) verwendet, die die Montage insbesondere an den Seiten verbessern. Mindestens einer der Führungszapfen, insbesondere alle Führungszapfen, kann bzw. können einstückig mit dem Stützbeschlag ausgeführt sein und beispielsweise an den Stützbeschlag angeformt sein. Alternativ kann als Führungszapfen auch ein separates bolzenförmiges Bauteil, beispielsweise ein Dübel, verwendet werden, das bzw. der jeweils in eine korrespondierende Vertiefung im Stützbeschlag eingesetzt ist.

Gemäß wiederum einer weiteren Ausgestaltung der erfindungsgemäßen Befestigungsanordnung weist das Halteteil mindestens eine Wand mit mindestens einer Öffnung auf, die einen Querschnitt hat, der ein Hindurchführen eines die Rastnase aufweisenden Stützmittelabschnitts erlaubt, wobei ein Abschnitt des Randes der Öffnung, insbesondere der obere Rand der Öffnung, der also im bestimmungsgemäß montierten Zustand der oberen Deckplatte am nächsten ist, den mit der jeweiligen Rastnase zusammenwirkenden Hinterschnitt bildet. Dabei kann die Wand im Inneren des Halteteils, beispielsweise im Inneren des zweiten Abschnitts des Halteteils, angeordnet sein. Insbesondere ist die Wand aber eine den zweiten Abschnitt des Halteteils und/oder die Aufnahme für das mindestens eine Stützmittel zur Leichtbauplatte hin begrenzende Wand. In einer solchen Wand kann auf einfache Weise ein Hinterschnitt gebildet werden, indem die Wand mit einer Öffnung versehen wird, deren Rand von einer hindurch geführten Rastnase hintergriffen werden kann.

Dabei ist es denkbar, dass jeder der Teile des zweiten Abschnitts des Halteteils, der, bezogen auf die Erstreckungsrichtung, seitlich des ersten Abschnitts liegt, jeweils eine Wand aufweist, die den zweiten Abschnitt zur Leichtbauplatte hin begrenzt, wobei die mindestens eine Öffnung in jeder der beiden Wände vorgesehen ist.

Grundsätzlich können erfindungsgemäß, unabhängig davon, welches die Wand mit der jeweils mindestens einen Öffnung ist, je Wand auch mindestens zwei Öffnungen vorgesehen sein. Wenn jeder der seitlich des ersten Abschnitts liegenden Teile des zweiten Abschnitts eine Wand mit mindestens einer Öffnung aufweist, ist es bevorzugt, wenn in jeder der beiden Wände mindestens zwei der Öffnungen vorgesehen sind, wobei je zwei Öffnungen (der dann insgesamt mindestens vier Öffnungen) vertikal übereinander angeordnet sind und/oder in vertikaler Richtung denselben Abstand von der oberen Deckplatte haben.

Mit "vertikal" bzw. der vertikalen Richtung ist die Richtung gemeint, in der die Lagen der Leichtbauplatte, also obere Deckplatte, Mittellage und untere Deckplatte, übereinander angeordnet sind. Sind zwei Öffnungen vertikal übereinander angeordnet und ist nur ein Stützmittel mit Rastnase je Öffnungspaar von zwei übereinander angeordneten Öffnungen vorgesehen, ist beim Zusammenstecken von Halteteil und Stützbeschlag die Ausrichtung des Halteteils und damit der Leichtbauplatte bzw. des Wandboards relativ zum Stützbeschlag nicht auf eine einzige Ausrichtung festgelegt. Im Gegenteil, das Halteteil und damit die Leichtbauplatte bzw. das Wandboard kann sowohl in einer ersten Position relativ zum Stützbeschlag als auch in einer um seine Längsachse um 180° gedrehten Position relativ zum Stützbeschlag mit diesem bestimmungsgemäß verbunden werden. Dadurch kann der Anwender bei der Montage der Leichtbauplatte bzw. des Wandboards an der Wand frei auswählen, welche Seite der Leichtbauplatte die Oberseite bilden soll. Auch wird die Herstellung, und zwar das Verbinden des Halteteils mit der Leichtbauplatte, vereinfacht, da das Halteteil nicht nur in einer einzigen vorbestimmten Position relativ zur Leichtbauplatte eingesetzt werden muss.

Besonders einfach gestaltet sich die Herstellung der Leichtbauplatte bzw. des Wandboards und insbesondere das Verbinden von Halteteil und Leichtbauplatte, wenn, wie dies gemäß noch einer weiteren Ausgestaltung der erfindungsgemäßen Befestigungsanordnung vorgesehen ist, das Halteteil bezogen auf eine in der Erstreckungsrichtung verlaufende vertikale und/oder horizontale Ebene spiegelsymmetrisch geformt ist. Einerseits lässt sich ein solches Halteteil besonders einfach formen. Andererseits lässt sich ein solches spiegelsymmetrisches Halteteil einfacher mit der Leichtbauplatte verbinden, da wie erläutert nicht nur eine einzige Ausrichtung des Halteteils relativ zur Leichtbauplatte vorgegeben ist.

Gemäß wiederum einer weiteren Ausgestaltung der erfindungsgemäßen Befestigungsanordnung weist der Stützbeschlag als Wandfixierungsmittel eine Platte und als das mindestens eine Stützmittel einen sich von dem Wandfixierungsmittel bzw. der Platte (im montierten Zustand) zum Halteteil, das heißt in die Aufnahme, erstreckenden Vorsprung auf. Vorzugsweise sind zwei solche sich von dem Wandfixierungsmittel zum Halteteil erstreckende Vorsprünge vorgesehen. Solche Vorsprünge lassen sich auf besonders einfache Weise durch entsprechende Öffnungen im Halteteil hindurchführen, um eine Rastverbindung zu gewährleisten.

In dem Fall, dass der Stützbeschlag als Wandfixierungsmittel eine Platte aufweist, kann vorgesehen sein, dass der mindestens eine Führungszapfen, vorzugsweise alle Führungszapfen, aus dem Wandfixierungsmittel, insbesondere aus der Platte, entgegen der Erstreckungsrichtung vorspringt bzw. vorspringen.

Gemäß noch einer Ausgestaltung der erfindungsgemäßen Befestigungsanordnung erstreckt sich die Rastnase (im montierten Zustand) von jedem der Stützmittel, insbesondere Vorsprünge, in vertikaler Richtung, insbesondere in Richtung der oberen Deckplatte. Dabei ist denkbar, dass der mindestens eine Führungszapfen bzw. vorzugsweise alle Führungszapfen näher an der der oberen Deckplatte im montierten Zustand zugewandten Seite des Stützbeschlags als an der der unteren Deckplatte im montierten Zustand zugewandten Unterseite des Stützbeschlags angeordnet ist bzw. sind. Auf diese Weise wird das Hauptmoment einer montierten Leichtbauplatte bzw. eines montierten Wandboards, welches durch die vertikal nach unten gerichtete Schwerkraft bestimmt wird, optimal von dem Stützbeschlag aufgenommen.

Gemäß wiederum einer weiteren Ausgestaltung der erfindungsgemäßen Befestigungsanordnung weist das Wandfixierungsmittel, insbesondere die Platte, Aufnahmen zum Hindurchführen von zur Verankerung in der Wand konfigurierten Befestigungsmitteln auf. Die Aufnahmen können nut- oder kanalförmig geformt sein und insbesondere von Bohrungen gebildet sein. Bei den genannten Befestigungsmitteln kann es sich um Schrauben, Nägel, Bolzen oder dergleichen handeln. Über diese Befestigungsmittel wird der Stützbeschlag und letztlich die Leichtbauplatte bzw. das Wandboard im bestimmungsgemäß montierten Zustand fest mit der Wand verbunden. Insbesondere ist zu jeder der Aufnahmen vertikal beabstandet einer der Führungszapfen angeordnet.

Gemäß noch einer Ausgestaltung der erfindungsgemäßen Befestigungsanordnung ist die Wand eine Holzwerkstoffplatte, insbesondere eine Span-, OSB- (oriented strand board) oder Faserplatte, wobei die Holzwerkstoffplatte auch die Deckplatte einer weiteren Leichtbauplatte sein kann. In diesem Fall ist die Wand also Teil der erfindungsgemäßen Befestigungsanordnung, was bei den übrigen Ausgestaltungen nicht zwingend ist. Die Wand kann, wie zuvor beschrieben wurde, von einem Seitenteil (Haupt), einer Rückwand, einem Boden oder einem Deckel eines Möbels gebildet sein.

Die Aufgabe wird ferner gemäß einer zweiten Lehre der vorliegenden Erfindung gelöst durch ein Möbel mit mindestens einer Befestigungsanordnung der zuvor definierten Art.

Es gibt nun eine Vielzahl von Möglichkeiten, die erfindungsgemäße Befestigungsanordnung und das erfindungsgemäße Möbel auszugestalten und weiterzubilden. Hierzu sei einerseits verwiesen auf die dem Patentanspruch 1 nachgeordneten Patentansprüche, andererseits auf die Beschreibung eines Ausführungsbeispiels in Verbindung mit der Zeichnung. In der Zeichnung zeigt:
- Fig. 1: eine schematische Schnittansicht einer erfindungsgemäßen Befestigungsanordnung,
- Fig. 2a) und b): perspektivische Ansichten eines Halteteils und eines Stützbeschlags der erfindungsgemäßen Befestigungsanordnung aus Figur 1,
- Fig. 3a) und b): Schnittansichten eines ersten Ausführungsbeispiels eines erfindungsgemäßen Möbels,
- Fig. 4a) und b): Schnittansichten eines zweiten Ausführungsbeispiels eines erfindungsgemäßen Möbels,
- Fig. 5: eine schematische Schnittansicht einer weiteren erfindungsgemäßen Befestigungsanordnung,
- Fig. 6: eine perspektivische Ansicht von Halteteil und Stützbeschlag der erfindungsgemäßen Befestigungsanordnung aus Fig. 5,
- Fig. 7a) und b): Schnittansichten eines dritten Ausführungsbeispiels eines erfindungsgemäßen Möbels und
- Fig. 8a) und b): Schnittansichten eines vierten Ausführungsbeispiels eines erfindungsgemäßen Möbels.

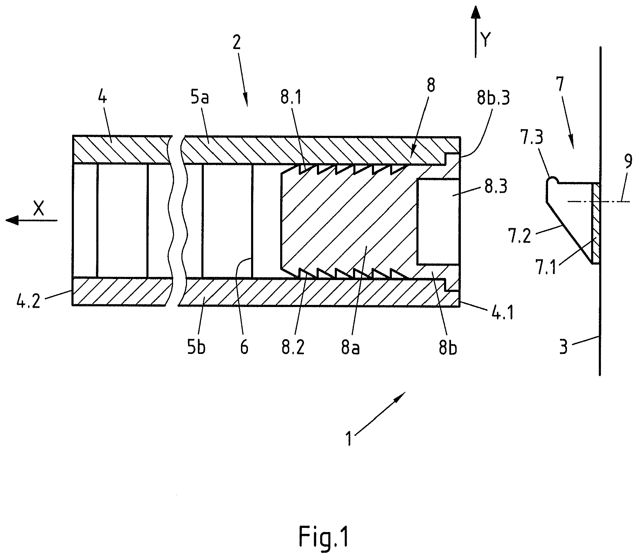

In Figur 1 ist eine Befestigungsanordnung 1 dargestellt, die zur Montage eines von einer Leichtbauplatte 4 mit integriertem Halteteil 8 gebildeten Wandboards 2 an einer Wand 3, hier einer Wand eines Gebäudes, dient.

Im Einzelnen ist in Figur 1 eine Befestigungsanordnung 1 gezeigt, mit einer sich von einer im montierten Zustand der Wand zugewandten, hinteren Schmalseite 4.1 zu einer im montierten Zustand von der Wand abgewandten, vorderen Schmalseite 4.2 in einer Erstreckungsrichtung X erstreckenden Leichtbauplatte 4, die eine obere Deckplatte 5a, eine untere Deckplatte 5b, von der die obere Deckplatte 5a in vertikaler Richtung Y beabstandet ist, und eine dazwischen angeordnete leichte Mittellage 6 aus einer Kartonwabe aufweist.

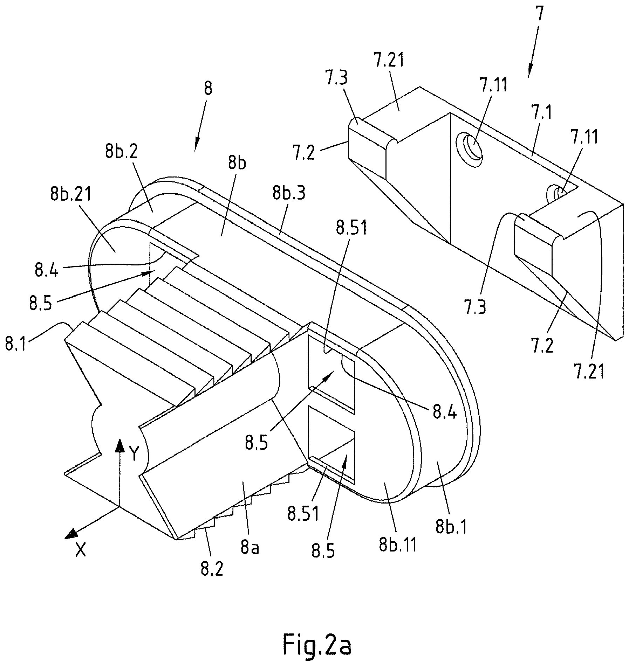

An der Wand 3 ist ein Stützbeschlag 7, der hier aus Kunststoff besteht, mit Befestigungsmitteln 9 (hier symbolisch durch eine strichpunktierte Linie dargestellt), zum Beispiel Schrauben, befestigt. Der Stützbeschlag 7 weist ein, wie in den Figuren 2a) und b) zu erkennen ist, plattenförmiges Wandfixierungsmittel 7.1 und zwei damit verbundene Stützmittel 7.2 in Form von Vorsprüngen bzw. Armen auf.

In die Mittellage 6 ist das Halteteil 8, welches in den Figuren 2a) und b) im Detail dargestellt ist und hier ebenfalls aus Kunststoff besteht, so eingesetzt, dass die der oberen Deckplatte 5a zugewandte Oberseite 8.1 und die der unteren Deckplatte 5b zugewandte Unterseite 8.2 des Halteteils 8 die jeweilige Deckplatte 5a bzw. 5b berührt. Die Oberseite 8.1 und die Unterseite 8.2 des Halteteils 8 weist ein Sägezahnprofil auf, das ein Einführen des Halteteils 8 in die Leichtbauplatte 4 unter einem vergleichsweise geringen Kraftaufwand erlaubt, zum Herausbewegen aus der Leichtbauplatte 4 aber einen vergleichsweise hohen Kraftaufwand erfordert. Das Halteteil 8 ist mit den Deckplatten 5a und 5b innenseitig verklebt.

Wie insbesondere die Figuren 2a) und b) zeigen, weist das Halteteil 8 eine stirnseitige Aufnahme 8.3 für den gesamten Stützbeschlag 7 und insbesondere für die beiden Stützmittel 7.2 des Stützbeschlags 7 auf, sodass im bestimmungsgemäß montierten Zustand der Stützbeschlag 7 vollständig im Halteteil 8 angeordnet ist, also die wandseitige Oberfläche des Stützbeschlags 7 mit der wandseitigen Oberfläche des Halteteils 8 bündig abschließt.

Das Halteteil 8 wirkt mit den beiden Stützmitteln 7.2 des Stützbeschlags 7 im montierten Zustand rastend zusammen. Dazu ist jedes der Stützmittel 7.2 an seiner Oberseite mit einer Rastnase 7.3 versehen, die mit einem in Figur 2a) erkennbaren Hinterschnitt 8.4, der in der dargestellten Positionierung der Bauteile vom oberen Teil des Randes 8.51 einer Öffnung 8.5 gebildet wird, zusammenwirkt.

Dabei weist das Halteteil 8 einen ersten, vergleichsweise schmalen Abschnitt 8a und einen damit einstückig verbundenen, vergleichsweise breiten, zweiten Abschnitt 8b auf, wobei der erste Abschnitt 8a zur Fixierung des Halteteils 8 in der Leichtbauplatte 4 dient und der zweite Abschnitt 8b die Aufnahme 8.3 und den Hinterschnitt 8.4 für die Rastverbindung bildet. Da der zweite Abschnitt 8b breiter als der erste Abschnitt 8a ist, ist, bezogen auf die Erstreckungsrichtung X, zu jeder Seite des ersten Abschnitts 8a ein Teil 8b.1 bzw. 8b.2 des zweiten Abschnitts 8b gebildet.

Entsprechend dem Stützbeschlag 7, der hier mit zwei separaten, in der Erstreckungsrichtung X hervorspringenden Stützmitteln 7.2 versehen ist, sind in jedem Teil 8b.1 und 8b.2 des zweiten Abschnitts 8b in der die Aufnahme 8.3 zur Leichtbauplatte 4 hin begrenzenden jeweiligen Rückwand 8b.11 bzw. 8b.21 zwei Öffnungen 8.5 ausgebildet, die einen Querschnitt haben, der ein Hindurchführen eines die Rastnase 7.3 aufweisenden Stützmittelabschnitts 7.21 erlauben. Dabei bildet ein Abschnitt des Randes 8.51 der Öffnung 8.5, hier der obere Randabschnitt der oberen Öffnung 8.5 und der untere Randabschnitt der unteren Öffnung 8.5, einen Hinterschnitt 8.4, der geeignet ist, mit der Rastnase 7.3 des jeweiligen Stützmittels 7.2 formschlüssig zusammenzuwirken. Da das Halteteil 8 bezogen auf eine in der Erstreckungsrichtung X verlaufende vertikale und horizontale Ebene jeweils spiegelsymmetrisch geformt ist, kann das Halteteil 8 gegenüber der in den Figuren 2a) und b) gezeigten Position auch um 180° gedreht werden, wobei die beiden Stützmittel 7.2 dann mit der in den Figuren 2a) und b) gezeigten unteren Öffnung 8.5 jeweils zusammenwirken würden.

Schließlich weist der Stützbeschlag 7 in seinem plattenförmigen Wandfixierungsabschnitt 7.1 zwei kanalförmige Aufnahmen bzw. Öffnungen 7.11 auf, durch die zur Befestigung an der Wand dienende Befestigungsmittel 9, beispielsweise Schrauben, geführt werden können.

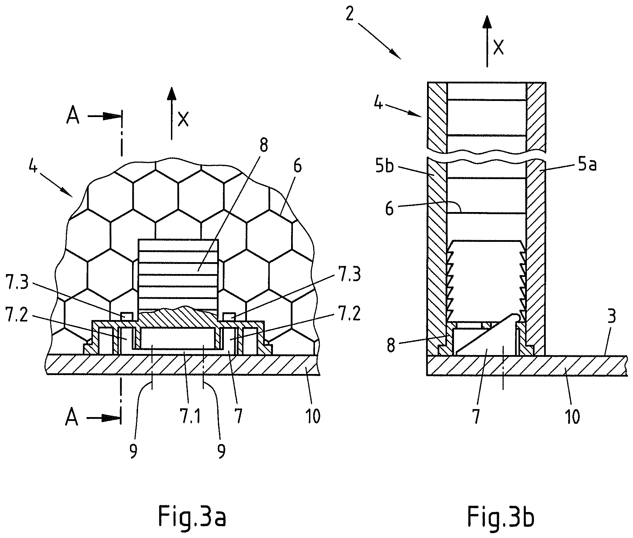

Figur 3a) zeigt eine Schnittansicht eines erfindungsgemäßen Möbels, wobei der Schnitt in Erstreckungsrichtung X und parallel zur Längsmittelebene einer Leichtbauplatte 4 geführt ist, die hier mit einem Möbel-Seitenteil 10, das hier zu Montagezwecken liegend angeordnet ist, mittels der vorangehend beschriebenen Befestigungsanordnung 1 verbunden worden ist. Das Seitenteil 10 bildet in diesem Fall die Wand 3, die der zuvor beschriebenen Gebäudewand 3 der vorangehenden Ausführungsbeispiele entspricht. Figur 3b) zeigt ebenfalls einen in Erstreckungsrichtung X verlaufenden Schnitt, der aber orthogonal zu dem Schnitt in Figur 3a) entlang der Linie AA verläuft.

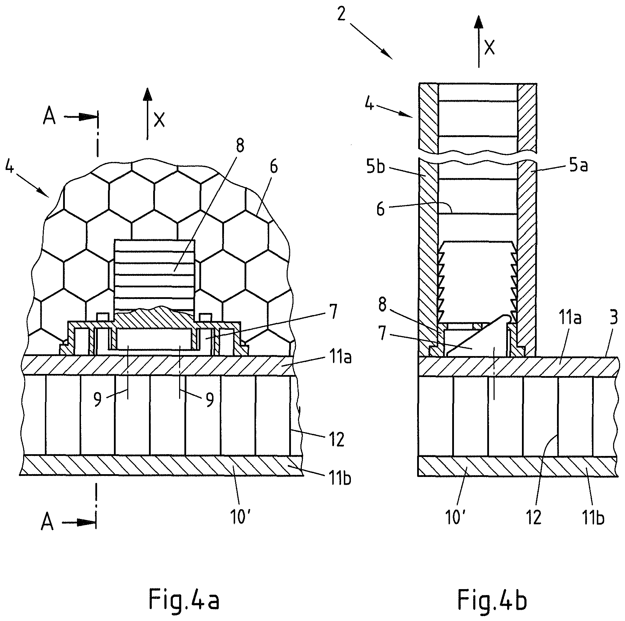

Die Figuren 4a) und b) zeigen ein weiteres Ausführungsbeispiel eines erfindungsgemäßen Möbels. Auch hier ist eine Leichtbauplatte 4 mit einer Wand 3 mittels der erfindungsgemäßen Befestigungsanordnung 1 verbunden. Wie die Schnittansichten in den Figuren 4a) und b), die den Schnittansichten in den Figuren 3a) und b) entsprechen, zeigen, wird in diesem Fall die Leichtbauplatte 4 mit einem Seitenteil 10' verbunden, welches selbst eine Leichtbauplatte mit einer oberen Deckplatte 11a, einer unteren Deckplatte 11b und einer dazwischen angeordneten leichten Mittellage 12 ist. Dabei bildet die obere Deckplatte 11a die Wand 3.

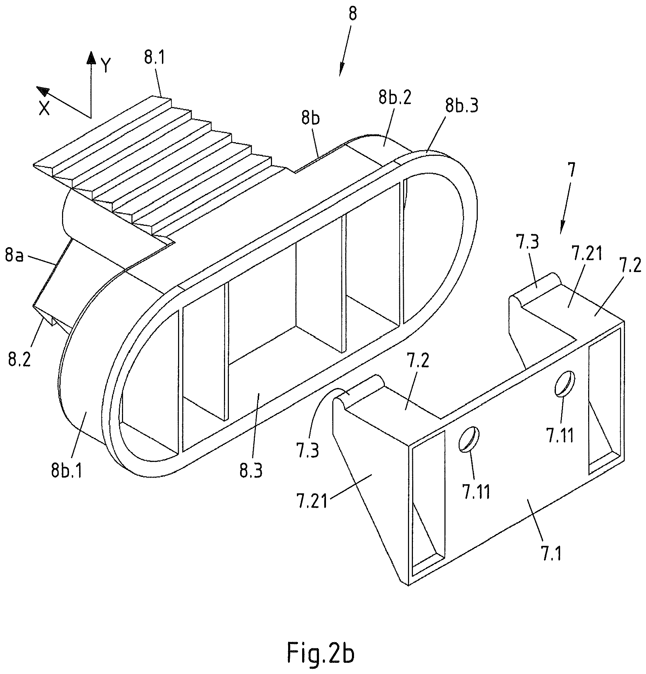

Die Montage bei den Ausführungsbeispielen in den Figuren 3a) und b) sowie 4a) und b) erfolgt wie bei den übrigen Ausführungsbeispielen in den Figuren 1 und 2, mit dem Unterschied, dass die Wand 3 keine Gebäudewand ist, sondern eine Holzwerkstoffplatte 10 bzw. 11a. Diese Holzwerkstoffplatte 10 bzw. 11a ist in beiden Fällen eine Spanplatte.

Bei den vorangehenden Ausführungsbeispielen weist der zweite Abschnitt 8b des Halteteils 8 einen umlaufenden Kragen 8b.3 auf, der als Anschlag an der Leichtbauplatte 4 dient. Ein Kragen ist aber nicht zwingend erforderlich, da das Halteteil 8, nachdem der Stützbeschlag 7 an der Wand 3 montiert worden ist, zunächst mit dem Stützbeschlag 7 verbunden werden kann und erst dann die Leichtbauplatte 4 auf das Halteteil 8 aufgeschoben werden kann, so dass dann die Wand 3 als Anschlag dient. Für den Fall, dass zunächst das Halteteil 8 in die Leichtbauplatte 4 eingesetzt werden soll, bevor dann die Gesamtheit aus Leichtbauplatte 4 und Halteteil 8 mit dem Stützbeschlag 7 verbunden wird, kann das Vorhandensein eines Kragens 8b.3 die Montage erleichtern, da das Halteteil 8 dadurch exakt zu der wandseitigen Schmalseite 4.1 der Leichtbauplatte ausgerichtet werden kann.

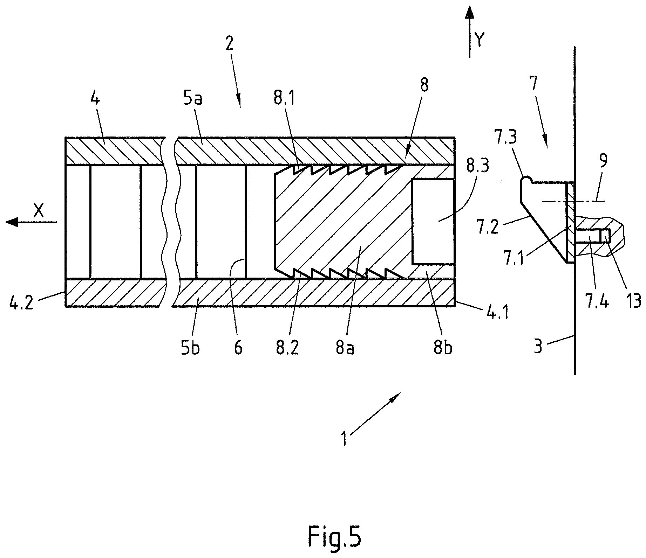

Fig. 5 zeigt für ein weiteres Ausführungsbeispiel eine Ansicht, welche der in Fig. 1 gewählten Ansicht entspricht. Bei dem in Fig. 5 gezeigten Ausführungsbeispiel ist der Stützbeschlag 7, insbesondere der plattenförmige Wandfixierungsabschnitt 7.1, an seiner zur Wand 3 weisenden Seite im Unterschied zu dem Ausführungsbeispiel in Fig. 1 zusätzlich noch mit zwei Führungszapfen 7.4 versehen, von denen in dieser Ansicht nur ein Führungszapfen sichtbar ist. Der in dieser Ansicht nicht sichtbare Führungszapfen ist genau wie der dargestellte Führungszapfen einstückig mit dem Stützbeschlag 7, insbesondere dem Wandfixierungsabschnitt 7.1, ausgeführt.

Der im bestimmungsgemäß montierten Zustand der erfindungsgemäßen Befestigungsanordnung über die hintere Schmalseite 4.1 der Leichtbauplatte hinausragende Teil des jeweiligen Führungszapfens 7.4 ist dabei in eine in der Wand 3 vorgebohrte Vertiefung 13 eingeführt.

Ein weiterer Unterschied zum Ausführungsbeispiel in Fig. 1 ist, dass der zweite Abschnitte 8b des Halteteils 8 hier keinen Kragen aufweist und entsprechend auch an den Stirnkanten der Deckplatten 5a und 5b auf eine Aufnahme für einen solchen Kragen verzichtet worden ist.

Im in Fig. 5 dargestellten Fall ist der zweite Abschnitt 8b sowohl mit der oberen Deckplatte 5a als auch der unteren Deckplatte 5b in Kontakt. Grundsätzlich kann aber auch ein Spiel zwischen der Oberseite des zweiten Abschnitts 8b und der Innenseite der oberen Deckplatte 5a und/oder zwischen der Unterseite des zweiten Abschnitts 8b und der Innenseite der unteren Deckplatte 5b vorgesehen sein.

Im Übrigen ist der Stützbeschlag 7 und das Halteteil 8 sowie die gesamte übrige Befestigungsanordnung 1 in derselben Weise ausgebildet, wie die in Fig. 1 gezeigte Befestigungsanordnung 1.

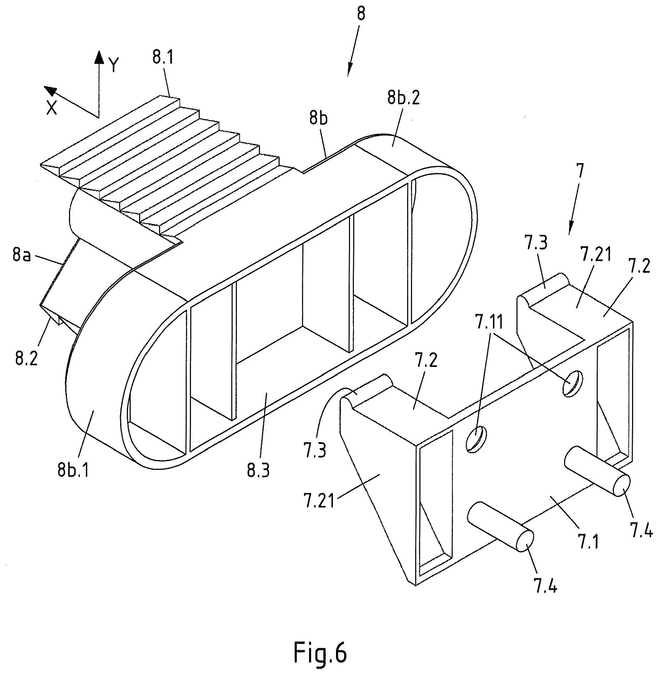

Fig. 6 zeigt in einer perspektivischen Ansicht, die der in Fig. 2b) gewählten Ansicht entspricht, Stützbeschlag 7 und Halteteil 8, welche in Fig. 5 Bestandteil der Befestigungsanordnung 1 sind. Deutlich zu erkennen sind hier die beiden Führungszapfen 7.4, welche gegenüber dem Wandfixierungsabschnitt 7.1 hervorspringen. Dabei sind in diesem Fall die Führungszapfen 7.4 jeweils vertikal unterhalb einer der Aufnahmen bzw. Öffnungen 7.11 angeordnet. Grundsätzlich ist es erfindungsgemäß aber auch denkbar, die Führungszapfen in horizontaler Richtung gegenüber den Aufnahmen bzw. Öffnungen zu versetzen. Es ist sogar denkbar, dass die Führungszapfen in derselben horizontalen Ebene wie die Aufnahmen bzw. Öffnungen 7.11 liegen.

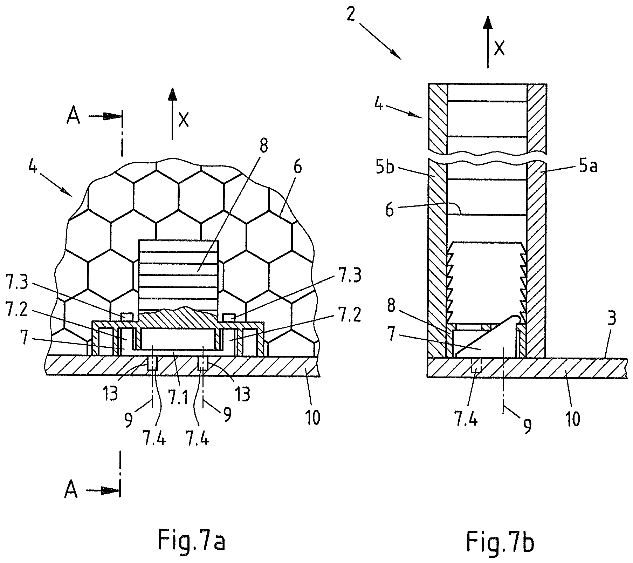

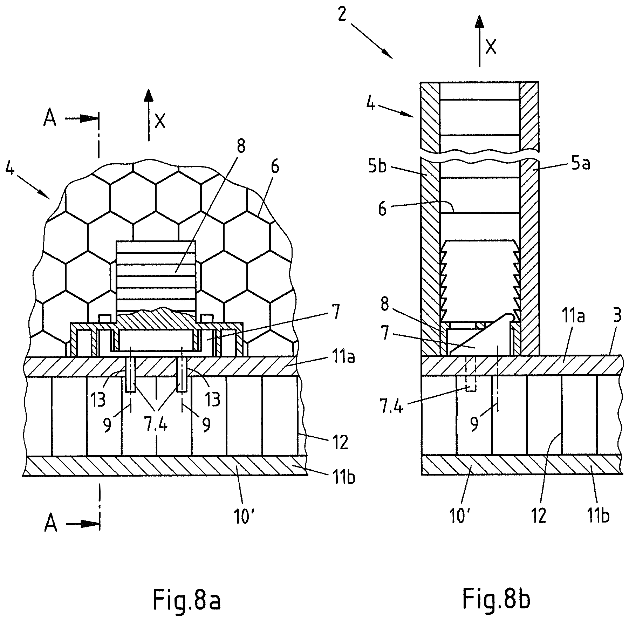

Schließlich zeigen die Figuren 7a) und b) ein drittes Ausführungsbeispiel eines erfindungsgemäßen Möbels und die Figuren 8a) und b) ein viertes Ausführungsbeispiel eines erfindungsgemäßen Möbels. Dabei entsprechen die Ansichten in diesen Figuren den Ansichten in den Figuren 3a) und b) bzw. 4a) und b).

Die jeweils in den Figuren 7a) und b) bzw. 8a) und b) dargestellte Befestigungsanordnung 1 unterscheidet sich von der in den Figuren 3a) und b) bzw. 4a) und b) gezeigten Befestigungsanordnung 1 jeweils dadurch, dass der Stützbeschlag 7, wie zuvor auch anhand der Figuren 5 und 6 erläutert, zusätzlich über zwei Führungszapfen 7.4 verfügt, die jeweils in eine Vertiefung 13 des Seitenteils 10 bzw. 10' eingesetzt sind.

Dabei ist die Länge der Führungszapfen 7.4, insbesondere die Länge des hervorstehenden Teils der Führungszapfen, und die Tiefe der Vertiefung 13 so gewählt, dass der jeweilige Führungszapfen 7.4 im montierten Zustand der Befestigungsanordnung 1 nicht an der Außenseite des Seitenteils 10 bzw. 10' hervorsteht und insbesondere an dieser Außenseite nicht sichtbar ist.

Im Falle der Figuren 7a) und b) handelt es sich bei der Vertiefung 13 um eine Sacklochbohrung, die nicht vollständig durch das Seitenteil 10 hindurchführt. Im Falle der Figuren 8a) und b) handelt es sich bei der Vertiefung 13 um eine durchgehende Bohrung, die vollständig durch die obere Deckplatte 11a der Leichtbauplatte 4 hindurchführt. In letzterem Fall ragt der jeweilige Führungszapfen 7.4 durch die obere Deckplatte 11a hindurch, nicht aber durch die untere Deckplatte 11b.

## Patentansprüche

1. Befestigungsanordnung (1) zur Montage einer Leichtbauplatte (4), insbesondere eines Wandboards (2),
an einer Wand (3)
- mit einer sich von einer hinteren Schmalseite (4.1) zu einer vorderen Schmalseite (4.2) in einer Erstreckungsrichtung (X) erstreckenden Leichtbauplatte (4), die eine obere Deckplatte (5a), eine vertikal davon beabstandete untere Deckplatte (5b) und eine dazwischen angeordnete leichte Mittellage (6) aufweist,
- mit mindestens einem an der Wand (3) befestigbaren Stützbeschlag (7), der ein Wandbefestigungsmittel (7.1) und mindestens ein mit dem Wandbefestigungsmittel (7.1) verbundenes Stützmittel (7.2) aufweist, und
- mit mindestens einem Halteteil (8), das eine der oberen Deckplatte (5a) zugewandte Oberseite (8.1) und eine der unteren Deckplatte (5b) zugewandte Unterseite (8.2) aufweist und mit einer stirnseitigen Aufnahme (8.3) für das mindestens eine Stützmittel (7.2) versehen ist, wobei das mindestens eine Halteteil (8) in der Erstreckungsrichtung (X) in die Mittellage (6) integriert ist und mit seiner Oberseite (8.1) die obere Deckplatte (5a) und mit seiner Unterseite (8.2) die untere Deckplatte (5b) berührt,
- wobei das Halteteil (8) mit dem Stützmittel (7.2) des Stützbeschlags (7) rastend zusammenwirkt,
**dadurch gekennzeichnet,**
**dass** das Halteteil (8) einen ersten Abschnitt (8a) und einen zweiten Abschnitt (8b) aufweist, wobei sich der erste Abschnitt (8a) in Erstreckungsrichtung (X) weiter in die Leichtbauplatte (4) erstreckt als der zweite Abschnitt (8b), wobei der zweite Abschnitt (8b) breiter als der erste Abschnitt (8a) ist und wobei das Halteteil (8) mit dem jeweiligen Stützmittel (7.3) des Stützbeschlags (7) in einem Teil (8b.1, 8b.2) des zweiten Abschnitts (8b) haltend zusammenwirkt, der, bezogen auf die Erstreckungsrichtung (X), seitlich des ersten Abschnitts (8a) liegt.

2. Befestigungsanordnung (1) nach einem der vorangehenden Ansprüche, **dadurch gekennzeichnet, dass** der Stützbeschlag (7) mindestens zwei Stützmittel (7.2) aufweist, mit denen das Halteteil (8) rastend zusammenwirkt und die insbesondere jeweils eine Rastnase (7.3) aufweisen, mit der jeweils ein Hinterschnitt (8.4) des Halteteils (8) in der Erstreckungsrichtung (X) haltend zusammenwirkt, wobei insbesondere der zweite Abschnitt (8b) zu beiden Seiten des ersten Abschnitts (8a) je einen Teil (8b.1,8b.2) aufweist, der, bezogen auf die Erstreckungsrichtung (X), seitlich des ersten Abschnitts (8a) liegt, und das Halteteil (8) in jedem dieser Teile (8b.1,8b.2) des zweiten Abschnitts (8b) mit jeweils mindestens einem der Stützmittel (7.2) haltend zusammenwirkt.

3. Befestigungsanordnung (1) nach einem der vorangehenden Ansprüche, **dadurch gekennzeichnet, dass** der Stützbeschlag (7) mindestens einen Führungszapfen (7.4) aufweist, wobei sich der mindestens eine Führungszapfen (7.4), insbesondere entgegen der Erstreckungsrichtung (X), über die hintere Schmalseite (4.1) der Leichtbauplatte (4) hinaus erstreckt.

4. Befestigungsanordnung (1) nach Anspruch 3, **dadurch gekennzeichnet, dass** der Stützbeschlag (7) mindestens zwei voneinander beabstandete Führungszapfen (7.4) aufweist, wobei insbesondere jeder der zu beiden Seiten des ersten Abschnitts (8a) angeordneten Teile des zweiten Abschnitts (8b) mit mindestens einem Führungszapfen (7.4) versehen ist.

5. Befestigungsanordnung (1) nach einem der vorangehenden Ansprüche, **dadurch gekennzeichnet, dass** das Halteteil (8) mindestens eine Wand (8b.11,8b.21) mit mindestens einer Öffnung (8.5) aufweist, die einen Querschnitt hat, der ein Hindurchführen eines die Rastnase (7.3) aufweisenden Stützmittelabschnitts (7.21) erlaubt, wobei ein Abschnitt des Randes (8.51) der Öffnung (8.5) den mit der jeweiligen Rastnase (7.3) zusammenwirkenden Hinterschnitt (8.4) bildet, wobei insbesondere die Wand (8b.11,8b.21) eine den zweiten Abschnitt (8b) des Halteteils (8) und/oder die Aufnahme (8.3) für das mindestens eine Stützmittel (7.2) zur Leichtbauplatte (4) hin begrenzende Wand ist.

6. Befestigungsanordnung (1) nach Anspruch 5, **dadurch gekennzeichnet, dass** jeder der Teile (8b.1,8b.2) des zweiten Abschnitts (8b) des Halteteils (8), der, bezogen auf die Erstreckungsrichtung (X), seitlich des ersten Abschnitts (8a) liegt, jeweils eine Wand (8b.11,8b.21) aufweist, die den zweiten Abschnitt (8b) zur Leichtbauplatte (4) hin begrenzt, wobei die mindestens eine Öffnung (8.5) in jeder der beiden Wände (8b.11,8b.21) vorgesehen ist.

7. Befestigungsanordnung (1) nach Anspruch 6, **dadurch gekennzeichnet, dass** in jeder der beiden Wände (8b.11,8b.21) mindestens zwei der Öffnungen (8.5) vorgesehen sind, wobei je zwei Öffnungen (8.5) vertikal übereinander angeordnet sind und/oder in vertikaler Richtung (Y) denselben Abstand von der oberen Deckplatte (5a) haben.

8. Befestigungsanordnung (1) nach einem der vorangehenden Ansprüche, **dadurch gekennzeichnet, dass** das Halteteil (8) bezogen auf eine in der Erstreckungsrichtung (X) verlaufende vertikale und/oder horizontale Ebene spiegelsymmetrisch geformt ist.

9. Befestigungsanordnung (1) nach einem der vorangehenden Ansprüche, **dadurch gekennzeichnet, dass** der Stützbeschlag (7) als Wandfixierungsmittel (7.1) eine Platte und als das mindestens eine Stützmittel (7.2) einen sich von dem Wandfixierungsmittel (7.1) zum Halteteil (8) erstreckenden Vorsprung, vorzugsweise zwei sich von dem Wandfixierungsmittel (7.1) zum Halteteil (8) erstreckende Vorsprünge, aufweist.

10. Befestigungsanordnung (1) nach Anspruch 9, **dadurch gekennzeichnet, dass** der mindestens eine Führungszapfen (7.4) aus dem Wandfixierungsmittel (7.1), insbesondere aus der Platte, entgegen der Erstreckungsrichtung (X) vorspringt.

11. Befestigungsanordnung (1) nach einem der vorangehenden Ansprüche, **dadurch gekennzeichnet, dass** sich die Rastnase (7.3) von jedem der Stützmittel (7.2) in vertikaler Richtung (Y), insbesondere in Richtung der oberen Deckplatte (5a), erstreckt.

12. Befestigungsanordnung (1) nach einem der vorangehenden Ansprüche, **dadurch gekennzeichnet, dass** das Wandfixierungsmittel (7.1) Aufnahmen (7.11), insbesondere Bohrungen, zum Hindurchführen von zur Verankerung in der Wand (3) konfigurierten Befestigungsmitteln (9) aufweist, wobei insbesondere zu jeder der Aufnahmen (7.11) vertikal beabstandet einer der Führungszapfen (7.4) angeordnet ist.

13. Befestigungsanordnung (1) nach einem der vorangehenden Ansprüche, **dadurch gekennzeichnet, dass** die Wand (3) eine Holzwerkstoffplatte, insbesondere eine Span-, OSB- oder Faserplatte ist und/oder die Wand (3) von einem Seitenteil, einer Rückwand, einem Boden oder einem Deckel eines Möbels gebildet wird.

14. Möbel mit mindestens einer Befestigungsanordnung (1) nach einem der Ansprüche 1 bis 13.

## Claims

1. Securing arrangement (1) for assembling a lightweight building board (4), in particular a wall board (2), on a wall (3),
- having a lightweight building board (4) which extends from a rear narrow side (4.1) to a front narrow side (4.2) in an extension direction (X) and which has an upper covering plate (5a), a lower covering plate (5b) which is vertically spaced apart therefrom, and a light central layer (6) which is arranged therebetween,
- having at least one support fitting (7) which can be secured to the wall (3) and which has a wall securing means (7.1) and at least one support means (7.2) which is connected to the wall securing means (7.1), and
- having at least one retaining portion (8) which has an upper side (8.1) facing the upper covering plate (5a) and a lower side (8.2) facing the lower covering plate (5b) and which is provided with an end-side receiving member (8.3) for the at least one support means (7.2), wherein the at least one retaining portion (8) is integrated in the extension direction (X) in the central layer (6) and touches with the upper side (8.1) thereof the upper covering plate (5a) and with the lower side (8.2) thereof the lower covering plate (5b),
- wherein the retaining portion (8) cooperates in a locking manner with the support means (7.2) of the support fitting (7),
**characterised in that**
the retaining portion (8) has a first portion (8a) and a second portion (8b), wherein the first portion (8a) extends in the extension direction (X) further into the lightweight building board (4) than the second portion (8b), wherein the second portion (8b) is wider than the first portion (8a) and wherein the retaining portion (8) cooperates in a retaining manner with the respective support means (7.3) of the support fitting (7) in a part (8b.1, 8b.2) of the second portion (8b) which is located, with respect to the extension direction (X), to the side of the first portion (8a).

2. Securing arrangement (1) according to any one of the preceding claims, **characterised in that** the support fitting (7) has at least two support means (7.2) with which the retaining portion (8) cooperates in a locking manner and which each in particular have a locking projection (7.3), with which an undercut (8.4) of the retaining portion (8) cooperates in each case in the extension direction (X) in a retaining manner, wherein in particular the second portion (8b) has at both sides of the first portion (8a) a part (8b.1, 8b.2) which, with respect to the extension direction (X), is located to the side of the first portion (8a) and the retaining portion (8) cooperates in each of these parts (8b.1, 8b.2) of the second portion (8b) with at least one of the support means (7.2) in a retaining manner.

3. Securing arrangement (1) according to any one of the preceding claims, **characterised in that** the support fitting (7) has at least one guiding journal (7.4), wherein the at least one guiding journal (7.4), in particular counter to the extension direction (X), extends beyond the rear narrow side (4.1) of the lightweight building board (4).

4. Securing arrangement (1) according to claim 3, **characterised in that** the support fitting (7) has at least two guiding journals (7.4) which are spaced apart from each other, wherein in particular each of the parts of the second portion (8b) which are arranged at both sides of the first portion (8a) is provided with at least one guiding journal (7.4).

5. Securing arrangement (1) according to any one of the preceding claims, **characterised in that** the retaining portion (8) has at least one wall (8b.11, 8b.21) having at least one opening (8.5) which has a cross-section which enables a support means portion (7.21) which has the locking projection (7.3) to be introduced, wherein a portion of the edge (8.51) of the opening (8.5) forms the undercut (8.4) which cooperates with the respective locking projection (7.3), wherein in particular the wall (8b.11, 8b.21) is a wall which delimits the second portion (8b) of the retaining portion (8) and/or the receiving member (8.3) for the at least one support means (7.2) in the direction towards the lightweight building board (4).

6. Securing arrangement (1) according to claim 5, **characterised in that** each of the parts (8b.1, 8b.2) of the second portion (8b) of the retaining portion (8) which, with respect to the extension direction (X), is located to the side of the first portion (8a) has a wall (8b.11, 8b.21) which delimits the second portion (8b) in the direction towards the lightweight building board (4), wherein the at least one opening (8.5) is provided in each of the two walls (8b.11, 8b.21).

7. Securing arrangement (1) according to claim 6, **characterised in that** at least two of the openings (8.5) are provided in each of the two walls (8b.11, 8b.21), wherein two openings (8.5) are provided in each case vertically one above the other and/or in a vertical direction (Y) have the same spacing from the upper covering plate (5a).

8. Securing arrangement (1) according to any one of the preceding claims, **characterised in that** the retaining portion (8) with respect to a vertical and/or horizontal plane which extends in the extension direction (X) is formed in a mirror-symmetrical manner.

9. Securing arrangement (1) according to any one of the preceding claims, **characterised in that** the support fitting (7) has as a wall fixing means (7.1) a plate and has as the at least one support means (7.2) a projection which extends from the wall fixing means (7.1) to the retaining portion (8), preferably two projections which extend from the wall fixing means (7.1) to the retaining portion (8).

10. Securing arrangement (1) according to claim 9, **characterised in that** the at least one guiding journal (7.4) protrudes from the wall fixing means (7.1), in particular from the plate, counter to the extension direction (X).

11. Securing arrangement (1) according to any one of the preceding claims, **characterised in that** the locking projection (7.3) extends from each of the support means (7.2) in a vertical direction (Y), in particular in the direction of the upper covering plate (5a).

12. Securing arrangement (1) according to any one of the preceding claims, **characterised in that** the wall fixing means (7.1) has receiving members (7.11), in particular holes, for introducing securing means (9) which are configured for anchoring in the wall (3), wherein in particular one of the guiding journals (7.4) is arranged with vertical spacing from each of the receiving members (7.11).

13. Securing arrangement (1) according to any one of the preceding claims, **characterised in that** the wall (3) is a wooden material panel, in particular a chipboard, OSB board or fibreboard, and/or the wall (3) is formed by a side portion, a rear wall, a base or a cover of an item of furniture.

14. Item of furniture having at least one securing arrangement (1) according to any one of claims 1 to 13.

## Revendications

1. Dispositif de fixation (1) pour le montage d'un panneau léger (4), en particulier d'une étagère murale (2), sur une paroi murale (3), ledit dispositif de fixation
- comprenant un panneau léger (4) s'étendant dans une direction d'étendue en longueur (X), depuis un petit côté arrière (4.1) jusqu'à un petit côté avant (4.2), panneau léger qui présente un panneau de couverture supérieur (5a), un panneau de couverture inférieur (5b) espacé verticalement dudit panneau de couverture supérieur, et une couche intermédiaire légère (6) disposée entre lesdits panneaux de couverture,
- comprenant au moins une ferrure de support (7) pouvant être fixée sur la paroi murale (3), ferrure de support qui présente un moyen de fixation murale (7.1) et au moins un moyen formant support (7.2) relié au moyen de fixation murale (7.1), et
- comprenant au moins une pièce de retenue (8) qui présente une partie supérieure (8.1) tournée vers le panneau de couverture supérieur (5a) et une partie inférieure (8.2) tournée vers le panneau de couverture inférieur (5b), ladite pièce de retenue étant dotée d'un logement (8.3), côté frontal, prévu pour le moyen formant support (7.2) au moins au nombre de un, où la pièce de retenue (8) au moins au nombre de un est intégrée dans la couche intermédiaire (6) suivant la direction d'étendue en longueur (X), et ladite pièce de retenue, par sa partie supérieure (8.1), vient au contact du panneau de couverture supérieur (5a) et, par sa partie inférieure (8.2), vient au contact du panneau de couverture inférieur (5b),
- où la pièce de retenue (8) agit de façon conjointe, par encliquetage, avec le moyen formant support (7.2) de la ferrure de support (7), **caractérisé**
**en ce que** la pièce de retenue (8) présente une première partie (8a) et une deuxième partie (8b), où la première partie (8a) s'étend plus loin dans le panneau léger (4), suivant la direction d'étendue en longueur (X), que la deuxième partie (8b), où la deuxième partie (8b) est plus large que la première partie (8a) et où la pièce de retenue (8) agit de façon conjointe, par retenue, dans une pièce (8b.1, 8b.2) de la deuxième partie (8b), avec le moyen formant support respectif (7.3) de la ferrure de support (7), pièce de la deuxième partie qui se trouve, relativement à la direction d'étendue en longueur (X), placée latéralement par rapport à la première partie (8a).

2. Dispositif de fixation (1) selon la revendication 1, **caractérisé en ce que** la ferrure de support (7) présente au moins deux moyens formant support (7.2) avec lesquels la pièce de retenue (8) agit de façon conjointe, par encliquetage, et les moyens formant support présentent à chaque fois, en particulier, un ergot d'encliquetage (7.3) avec lequel une contre-dépouille (8.4) de la pièce de retenue (8) agit à chaque fois de façon conjointe, par retenue, dans la direction d'étendue en longueur (X), où en particulier la deuxième partie (8b) présente à chaque fois, des deux côtés de la première partie (8a), une pièce (8b.1, 8b.2) qui, relativement à la direction d'étendue en longueur (X), se situe latéralement par rapport à la première partie (8a), et la pièce de retenue (8) agit de façon conjointe, par retenue, dans chacune de ces pièces (8b.1, 8b.2) de la deuxième partie (8b), à chaque fois avec au moins l'un des moyens formant support (7.2).

3. Dispositif de fixation (1) selon l'une ou l'autre des revendications précédentes, **caractérisé en ce que** la ferrure de support (7) présente au moins un tourillon de guidage (7.4), où le tourillon de guidage (7.4) au moins au nombre de un s'étend en particulier au-delà du petit côté arrière (4.1) du panneau léger (4), dans le sens inverse de la direction d'étendue en longueur (X).

4. Dispositif de fixation (1) selon la revendication 3, **caractérisé en ce que** la ferrure de support (7) présente au moins deux tourillons de guidage (7.4) espacés l'un de l'autre, où en particulier chacune des pièces de la deuxième partie (8b) est dotée d'au moins un tourillon de guidage (7.4), chacune desdites pièces étant disposée des deux côtés de la première partie (8a).

5. Dispositif de fixation (1) selon l'une quelconque des revendications précédentes, **caractérisé en ce que** la pièce de retenue (8) présente au moins une paroi (8b.11, 8b.21) ayant au moins une ouverture (8.5) qui a une section qui permet une introduction d'une partie du moyen formant support (7.21) présentant l'ergot d'encliquetage (7.3), où une partie du bord (8.51) de l'ouverture (8.5) forme la contre-dépouille (8.4) agissant de façon conjointe avec l'ergot d'encliquetage respectif (7.3), où en particulier la paroi (8b.11, 8b.21) est une paroi délimitant, en direction du panneau léger (4), la deuxième partie (8b) de la pièce de retenue (8) et/ou le logement (8.3) prévu pour le moyen formant support (7.2) au moins au nombre de un.

6. Dispositif de fixation (1) selon la revendication 5, **caractérisé en ce que** chacune des pièces (8b.1, 8b.2) de la deuxième partie (8b) de la pièce de retenue (8), qui, relativement à la direction d'étendue en longueur (X), se situe latéralement par rapport à la première partie (8a), et chacune desdites pièces présente à chaque fois une paroi (8b.11, 8b.21) qui délimite la deuxième partie (8b) en direction du panneau léger (4), où l'ouverture (8.5) au moins au nombre de un est prévue dans chacune des deux parois (8b.11, 8b.21).

7. Dispositif de fixation (1) selon la revendication 6, **caractérisé en ce qu'**il est prévu au moins deux des ouvertures (8.5) dans chacune des deux parois (8b.11, 8b.21), où deux ouvertures (8.5) sont disposées à chaque fois l'une au-dessus de l'autre dans le sens vertical et/ou ont la même distance, dans la direction verticale (Y), par rapport au panneau de couverture supérieur (5a).

8. Dispositif de fixation (1) selon l'une quelconque des revendications précédentes, caractérisé en ce la pièce de retenue (8) est formée de façon symétrique à effet miroir, par rapport à un plan vertical et/ou horizontal s'étendant dans la direction d'étendue en longueur (X).

9. Dispositif de fixation (1) selon l'une quelconque des revendications précédentes, **caractérisé en ce que** la ferrure de support (7) présente, comme moyen de fixation murale (7.1), un panneau, et présente, comme moyen formant support (7.2) au moins au nombre de un, une partie saillante s'étendant depuis le moyen de fixation murale (7.1) jusqu'à la pièce de retenue (8), ladite ferrure de support présentant de préférence deux parties saillantes s'étendant depuis le moyen de fixation murale (7.1) jusqu'à la pièce de retenue (8).

10. Dispositif de fixation (1) selon la revendication 9, **caractérisé en ce que** le tourillon de guidage (7.4) au moins au nombre de un est en saillie par rapport au moyen de fixation murale (7.1), en particulier par rapport au panneau, dans le sens inverse de la direction d'étendue en longueur (X).

11. Dispositif de fixation (1) selon l'une quelconque des revendications précédentes, **caractérisé en ce que** l'ergot d'encliquetage (7.3) de chacun des moyens de support (7.2) s'étend suivant la direction verticale (Y), en particulier dans la direction du panneau de couverture supérieur (5a).

12. Dispositif de fixation (1) selon l'une quelconque des revendications précédentes, **caractérisé en ce que** le moyen de fixation murale (7.1) présente des logements (7.11), en particulier des perçages, servant à introduire des moyens de fixation (9) configurés pour l'ancrage dans la paroi murale (3), où l'un des tourillons de guidage (7.4) est disposé en étant en particulier espacé verticalement de chacun des logements (7.11).

13. Dispositif de fixation (1) selon l'une quelconque des revendications précédentes, **caractérisé en ce que** la paroi murale (3) est un panneau en bois, en particulier un panneau aggloméré, un panneau à couches de lamelles de type OSB ou un panneau à base de fibres et/ou la paroi murale (3) est formée par une pièce latérale, par une paroi arrière, par un fond ou par un dessus d'un meuble.

14. Meuble comprenant au moins un dispositif de fixation (1) selon l'une quelconque des revendications 1 à 13.
